# EUROPÄISCHE PATENTSCHRIFT

(11) **EP 3 831 563 B1**
(45) Veröffentlichungstag und Bekanntmachung des Hinweises auf die Patenterteilung: **27.09.2023**
(21) Anmeldenummer: 20211468.2
(22) Anmeldetag: 03.12.2020
(51) Int. Cl.: B27D 5/00, G05B 19/19, G05B 19/404

(54) **STELLEINRICHTUNG FÜR EIN BEARBEITUNGSAGGREGAT, BEARBEITUNGSEINRICHTUNG SOWIE VERFAHREN ZUM REGELN EINER STELLBEWEGUNG EINES BEARBEITUNGSAGGREGATS**
POSITIONING DEVICE FOR A MACHINING UNIT, MACHINING DEVICE AND METHOD FOR CONTROLLING AN ADJUSTING MOVEMENT OF A MACHINING UNIT
DISPOSITIF DE RÉGLAGE POUR UNE UNITÉ D'USINAGE, DISPOSITIF D'USINAGE AINSI QUE PROCÉDÉ DE RÉGULATION D'UN MOUVEMENT DE RÉGLAGE D'UNE UNITÉ D'USINAGE

(30) Priorität: 05.12.2019 DE 102019133145
(43) Veröffentlichungstag der Anmeldung: 09.06.2021
(73) Patentinhaber: HOMAG Kantentechnik GmbH, 32657 Lemgo (DE)
(72) Erfinder: Garnjost, Ralf, 32791 Lage (DE)
(74) Vertreter: Hoffmann Eitle

(56) Entgegenhaltungen:
- EP-A2- 0 828 083
- US-A1- 2004 011 460
- RAD CIPRIAN-RADU ET AL: "An improved nonlinear modelling and identification methodology of a servo-pneumatic actuating system with complex internal design for high-accuracy motion control applications", SIMULATION MODELLING PRACTICE AND THEORY, ELSEVIER, AMSTERDAM, NL, Bd. 75, 2. April 2017 (2017-04-02), Seiten 29-47, XP029998046, ISSN: 1569-190X, DOI: 10.1016/J.SIMPAT.2017.03.008

## Beschreibung

Die Erfindung betrifft eine Stelleinrichtung zum Regeln einer Stellbewegung eines Bearbeitungsaggregats, eine Bearbeitungseinrichtung zum Bearbeiten von Werkstücken sowie ein Verfahren zum Regeln einer Stellbewegung eines Bearbeitungsaggregats.

Es sind Bearbeitungseinrichtungen, beispielsweise Holzbearbeitungseinrichtungen, zum Bearbeiten von Werkstücken bekannt, bei welchen ein Bearbeitungsaggregat zum Durchführen eines Bearbeitungsvorgangs verfahrbar zum Werkstück vorgesehen ist. Diese können sowohl als eine stationäre Bearbeitungseinrichtung oder auch als eine Durchlaufmaschine, bei welcher die Werkstücke während des Bearbeitungsvorgangs relativ zum Bearbeitungsaggregat in einer Durchlaufrichtung bewegt werden, ausgebildet sein. Zum Steuern der Stellbewegung ist eine Stelleinrichtung vorgesehen, die eine mehrachsige Stellbewegung des Bearbeitungsaggregats ermöglicht und zumeist elektrisch oder pneumatisch angetrieben ist. Um Konturungenauigkeiten des Werkstücks beim Bearbeitungsvorgang ausgleichen zu können, muss die Stelleinrichtung einen Ausgleich von Werkstücktoleranzen ermöglichen. Elektrische Antriebssysteme erfordern hierfür eine entsprechende Tastsensorik, die jedoch zu einem komplexen und kostenintensiven System führt. Aufgrund der Kompressibilität des Pneumatikmediums ermöglichen pneumatische Antriebssysteme systembedingt einen Ausgleich von Werkstücktoleranzen, weisen jedoch eine eingeschränkte Regelungsmöglichkeit auf. Aufgrund dieser können hohe Stellkräfte beim Ausführen der Stellbewegung zu Beschädigungen an der Werkstückoberfläche führen.

Ein Beispiel einer bisher bekannten Stelleinrichtung geht aus US 2004/011460 A1 hervor.

Aufgabe der vorliegenden Erfindung ist es eine Stelleinrichtung für ein Bearbeitungsaggregat vorzuschlagen, die eine Regelung einer Stellbewegung des Bearbeitungsaggregats ermöglicht und einen konstruktiv einfachen Aufbau aufweist. Zudem ist es Aufgabe der Erfindung eine Bearbeitungseinrichtung vorzuschlagen, die eine qualitativ hochwertige Bearbeitung von Werkstücken ermöglicht. Des Weiteren ist es Aufgabe der Erfindung ein Verfahren vorzuschlagen, durch welches eine präzise Regelung einer Stellbewegung eines Bearbeitungsaggregats ermöglicht ist.

Diese Aufgabe wird durch eine Stelleinrichtung gemäß Anspruch 1 gelöst, wobei eine Steuerungseinrichtung zum Ansteuern zumindest eines pneumatischen Aktuators vorgesehen ist und die Ansteuerung des zumindest einen pneumatischen Aktuators in Abhängigkeit eines Steuerungssignals der Steuerungseinrichtung regelbar ist. Durch eine solche Stelleinrichtung kann die Stellbewegung eines Bearbeitungsaggregats in eine erste und/oder in wenigstens eine weitere Bewegungsrichtung ansteuerbar sein. Indem der zumindest eine pneumatische Aktuator in Abhängigkeit des Steuerungssignals ansteuerbar ist, kann die Stellbewegung des pneumatischen Aktuators zudem regelbar sein. Das Bearbeitungsaggregat kann auf diese Weise eine definierte Stellbewegung ausführen, durch welche das Bearbeitungsaggregat für den Bearbeitungsvorgang gezielt relativ zum Werkstück verfahrbar ist. Dadurch, dass die Stellbewegung durch zumindest einen pneumatischen Aktuator ansteuerbar ist, kann beim Ausführen des Bearbeitungsvorgangs aufgrund der Kompressibilität des Pneumatikmediums zudem ein systembedingter Ausgleich von Werkstücktoleranzen ermöglicht sein. Der Einsatz einer zusätzlichen Tasteinrichtung zur Führung des Bearbeitungsaggregats beim Bearbeitungsvorgang ist dadurch nicht erforderlich.

Es ist ferner vorsehen, dass die Steuerungseinrichtung eine Sensoreinheit zum Erfassen wenigstens eines Stellparameters des zumindest einen pneumatischen Aktuators aufweist und die Regelung der Ansteuerung des zumindest einen pneumatischen Aktuators in Abhängigkeit von dem wenigstens einen erfassten Stellparameter vorgesehen ist. Auf diese Weise ist eine Ansteuerung des zumindest einen pneumatischen Aktuators unter Berücksichtigung wenigstens eines Stellparameters des pneumatischen Aktuators ermöglicht, wodurch eine gezielte Regelung der Stellbewegung ermöglicht sein kann. Die Erfassung des wenigstens einen Stellparameters sowie die Ansteuerung des pneumatischen Aktuators kann dabei in Echtzeit erfolgen, sodass durch die Regelung der Stellbewegung Werkstücktoleranzen oder eine abweichende Werkstückpositionierung unmittelbar ausgeglichen werden können.

Die Sensoreinheit ist in einer integral mit dem zumindest einen pneumatischen Aktuator ausgebildet. Diese integrale Ausgestaltung kann sowohl eine präzise Erfassung des wenigstens einen Stellparameters ermöglichen als auch eine kompakte und wartungsarme konstruktive Ausgestaltung.

In einer bevorzugten Weiterbildung der Stelleinrichtung kann vorgesehen sein, dass die Sensoreinheit zumindest eine Wegmesseinrichtung aufweist und der wenigstens eine erfasste Stellparameter eine Stellposition, ein Stellweg und/oder eine Stellgeschwindigkeit des zumindest einen pneumatischen Aktuators umfasst. Auf diese Weise kann das Steuerungssignal zum Ansteuern des zumindest einen pneumatischen Aktuators in Abhängigkeit von einer Stellposition, einem Stellweg und/oder einer Stellgeschwindigkeit des pneumatischen Aktuators gebildet werden, wodurch eine sehr präzise Regelung der Stellbewegung ermöglicht ist.

Das Steuerungssignal umfasst Stellinformationen zum Ausführen des Bearbeitungsvorgangs, wobei die Stellinformationen durch die Steuerungseinrichtung in Abhängigkeit von dem wenigstens einen erfassten Stellparameter des zumindest einen pneumatischen Aktuators und/oder dem zu bearbeitenden Werkstück anpassbar sind, sodass eine regelbare Stellbewegung des Bearbeitungsaggregats ausführbar ist. Die Stellinformationen bilden ein Bearbeitungsprogramm, insbesondere ein CNC-Bearbeitungsprogramm, welches Stellinformationen zum Ansteuern einer definierten Stellbewegung des Bearbeitungsaggregats umfasst. Die Steuerungseinrichtung weist insbesondere mehrerer solcher Bearbeitungsprogramme auf, sodass auch unterschiedliche Werkstückgeometrien bearbeitbar sein können. Indem die Stellinformationen in Abhängigkeit von dem wenigstens einen erfassten Stellparameter anpassbar sind, kann das vorgegebene Bearbeitungsprogramm individuell an ein zu bearbeitendes Werkstück angepasst werden.

Der zumindest eine pneumatische Aktuator kann in einer weiteren bevorzugten Ausführung der Stelleinrichtung durch ein Regelventil mit einer variablen Druckregelung, variablen Volumenstromregelung und/oder variablen Richtungssteuerung ansteuerbar sein und vorzugsweise eine Regelung der Stellbewegung mit einer variablen Stellgeschwindigkeit, variablen Stellkraft und/oder einem variablen Stellweg vorgesehen sein. Ein solches Regelventil ermöglicht eine dynamische Ansteuerung des zumindest einen pneumatischen Aktuators. Durch diese dynamische Ansteuerung kann eine dynamische Stellbewegung des zumindest einen pneumatischen Aktuators ausführbar sein. Bei dieser kann die Stellbewegung während des Bearbeitungsvorgangs dynamisch verändert bzw. angepasst werden. Insbesondere kann die Stellbewegung dadurch mit einer variablen Stellgeschwindigkeit, variablen Stellkraft und/oder einem variablen Stellweg ausführbar sein.

Eine vorteilhafte Weiterbildung der Stelleinrichtung kann vorsehen, dass das Bearbeitungsaggregat als ein Fräsaggregat, Kappaggregat, Beschichtungsaggregat, Druckaggregat, Markieraggregat oder dergleichen ausgebildet ist und zum Ausführen des Bearbeitungsvorgangs durch die erste und/oder die wenigstens eine weitere Stelleinheit in Anlage zu dem Werkstück bringbar ist. Dabei kann das Bearbeitungsaggregat insbesondere für die Bearbeitung einer Werkstückkontur, einer Werkstückkante, einer Werkstückoberfläche, einer Schmalfläche des Werkstücks oder eines an dem Werkstück angebrachten Beschichtungsmaterials oder zum Anbringen eines Beschichtungsmaterials am Werkstück, vorzugsweise eines Schmalflächenbeschichtungsmaterials an einer Schmalfläche des Werkstücks, vorgesehen sein.

Die Aufgabe wird zudem durch eine Bearbeitungseinrichtung mit wenigstens einem Bearbeitungsaggregat zum Bearbeiten von Werkstücken, die in einer Durchlaufrichtung zu dem Bearbeitungsaggregat bewegbar sind, wobei das Bearbeitungsaggregat relativ zu dem zu bearbeitenden Werkstück verfahrbar vorgesehen ist, gelöst, wobei zum Verfahren des Bearbeitungsaggregats eine Stelleinrichtung gemäß einer der zuvor beschriebenen Ausführungsformen vorgesehen ist. Durch eine Bearbeitungseinrichtung mit einer solchen Stelleinrichtung kann eine Stellbewegung des Bearbeitungsaggregats in eine erste und/oder in wenigstens eine weitere Bewegungsrichtung ansteuerbar sein. Die Ansteuerung des Bearbeitungsaggregats kann dabei in Abhängigkeit eines Steuerungssignals erfolgt, wodurch eine gezielte Regelung der Stellbewegung ermöglicht ist. Dabei kann die Stellbewegung durch die Stelleinrichtung insbesondere dynamisch geregelt werden, wodurch die Bearbeitungseinrichtung eine qualitativ hochwertige Bearbeitung der Werkstücke ermöglicht.

Des Weiteren wird die Aufgabe durch ein Verfahren zum Regeln einer Stellbewegung eines Bearbeitungsaggregats relativ zu einem zu bearbeitenden Werkstück gelöst, mit einer Stelleinrichtung gemäß einer der vorhergehend beschriebenen Ausführungsformen, bei welchem zumindest ein pneumatischer Aktuator einer ersten Stelleinheit und/oder zumindest ein pneumatischer Aktuator wenigstens einer weiteren Stelleinheit angesteuert werden, um das Bearbeitungsaggregat in einer ersten und/oder in wenigstens einer weiteren Bewegungsrichtung zu verfahren, wobei die pneumatischen Aktuatoren in Abhängigkeit eines Steuerungssignals einer Steuerungseinrichtung geregelt angesteuert werden. Indem die pneumatischen Aktuatoren in Abhängigkeit vom Steuerungssignal ansteuerbar sind, kann eine regelbare Stellbewegung des Bearbeitungsaggregats in eine erste und/oder in wenigstens eine weitere Bewegungsrichtung ausgeführt werden, wodurch eine definierte Stellbewegung des Bearbeitungsaggregats angesteuert werden kann. Durch diese kann das Bearbeitungsaggregat geregelt, vorzugsweise dynamisch, relativ zum Werkstück verfahren werden, um den Bearbeitungsvorgang auszuführen. Eine Tasteinrichtung zur Führung des Bearbeitungsaggregats beim Bearbeitungsvorgang ist aufgrund dieser Regelung nicht erforderlich. Zudem ermöglicht ein solches Verfahren die Stellbewegungen zum Ausführen eines Bearbeitungsvorgangs auch ohne ein Werkstück anzusteuern, sodass eine Simulation des Bearbeitungsvorgangs ermöglicht ist. Dadurch kann eine schnelle und einfache Inbetriebnahme der Bearbeitungseinrichtung ermöglicht sein.

Eine besonders bevorzugte Ausgestaltung des Verfahrens kann vorsehen, dass eine Sensoreinheit Stellparameter der pneumatischen Aktuatoren erfasst und an die Steuerungseinrichtung übermittelt und die pneumatischen Aktuatoren in Abhängigkeit von den erfassten Stellparametern angesteuert werden. Vorzugsweise kann die Ansteuerung des zumindest einen pneumatischen Aktuators in Abhängigkeit einer Stellposition, eines Stellweges und/oder einer Stellgeschwindigkeit des zumindest einen pneumatischen Aktuators vorgesehen sein. Durch die Erfassung der Stellparameter kann die Stellbewegung des Bearbeitungsaggregats gezielt in Abhängigkeit der Stellposition, des ausgeführten Stellweges und/oder der Stellgeschwindigkeit des pneumatischen Aktuators geregelt werden. Dabei kann die Erfassung der Stellparameter sowie die Ansteuerung der Stellbewegung im Wesentlichen zeitgleich erfolgen, wodurch eine präzise Regelung der Stellbewegung in Echtzeit ermöglicht ist.

Eine vorteilhafte Weiterbildung des Verfahrens kann zudem vorsehen, dass das Steuerungssignal zum Ansteuern der pneumatischen Aktuatoren durch Stellinformationen zum Ausführen des Bearbeitungsvorgangs am Werkstück gebildet wird, wobei die Stellinformationen durch die Steuerungseinrichtung in Abhängigkeit von den erfassten Stellparametern der pneumatischen Aktuatoren und/oder dem zu bearbeitenden Werkstück angepasst werden, sodass eine geregelte Stellbewegung des Bearbeitungsaggregats für den Bearbeitungsvorgang ausgeführt wird. Auf diese Weise kann eine individuelle Anpassung der Stellinformationen in Abhängigkeit von den erfassten Stellparametern erreicht sein, sodass die Stellbewegung zum Erzielen eines optimalen Bearbeitungsergebnisses auf das zu bearbeitende Werkstück angepasst werden kann.

In einer weiteren bevorzugten Ausgestaltung des Verfahrens kann vorgesehen sein, dass durch die beim Ausführen des Bearbeitungsvorgangs oder beim Ausführen mehrerer aufeinanderfolgender Bearbeitungsvorgängen erfassten Stellparameter eine Abweichung eines Istzustands der pneumatischen Aktuatoren von einem Sollzustand ermittelt und/oder vorherbestimmt wird und bei einer Abweichung des Istzustands vom Sollzustand die Stellinformationen zum Ausführen des Bearbeitungsvorgangs in der Weise angepasst werden, dass die Abweichung beim Ansteuern der pneumatischen Aktuatoren ausgeglichen wird. Eine solche Abweichung des Istzustands der pneumatischen Aktuatoren vom Sollzustand kann aufgrund von Temperatureinflüssen, Verschleißerscheinungen oder aufgrund sonstiger Einflüsse auf die pneumatischen Aktuatoren bzw. das Bearbeitungsaggregat auftreten. Durch die Bestimmung einer aus diesen Einflüssen resultierenden Änderung der Stellparameter kann eine Abweichung vom Sollzustand erkannt und die Stellinformationen entsprechend angepasst werden. Durch diese Anpassung kann beim Ausführen des Bearbeitungsvorgangs oder beim Ausführen aufeinanderfolgender Bearbeitungsvorgänge eine gleichbleibende Bearbeitungsqualität erzielt werden. Indem ein Istzustand der pneumatischen Aktuatoren aufgrund einer ermittelten Abweichung vorherbestimmt wird, kann zudem eine voraussichtlich auftretende Abweichung im Vorfeld erkannt werden, sodass eine eventuelle Wartung frühzeitig veranlasst werden kann und Störungen oder Ausfälle der Bearbeitungseinrichtung vermieden werden können.

Eine vorteilhafte Weiterbildung des Verfahrens kann zudem vorsehen, dass die erfassten Stellparameter einer zentralen Rechnereinheit übermittelt werden und die Bearbeitungseinrichtung in Abhängigkeit von den erfassten Stellparametern der pneumatischen Aktuatoren durch die zentrale Rechnereinheit überwacht und/oder gewartet wird. Dadurch kann eine Fernüberwachung der Bearbeitungseinrichtung vorgesehen sein, wobei die erfassten Stellparameter, der Istzustand oder weitere Maschinendaten über ein Datennetzwerk der zentralen Rechnereinheit übermittelt werden. Durch die zentrale Rechnereinheit kann zudem ermöglicht sein, dass eine Vielzahl von Bearbeitungseinrichtungen oder weiterer Produktions- und/oder Logistikeinrichtungen oder ähnliches über das Datennetzwerk miteinander verbunden werden, sodass ein umfassender Daten- bzw. Kommunikationsaustausch im Sinne der Industrie 4.0 ermöglicht ist.

Die Erfindung sowie weitere vorteilhafte Ausführungsformen und Weiterbildungen derselben werden im Folgenden anhand des in der Figur dargestellten Beispiels näher beschrieben und erläutert. Es zeigt:

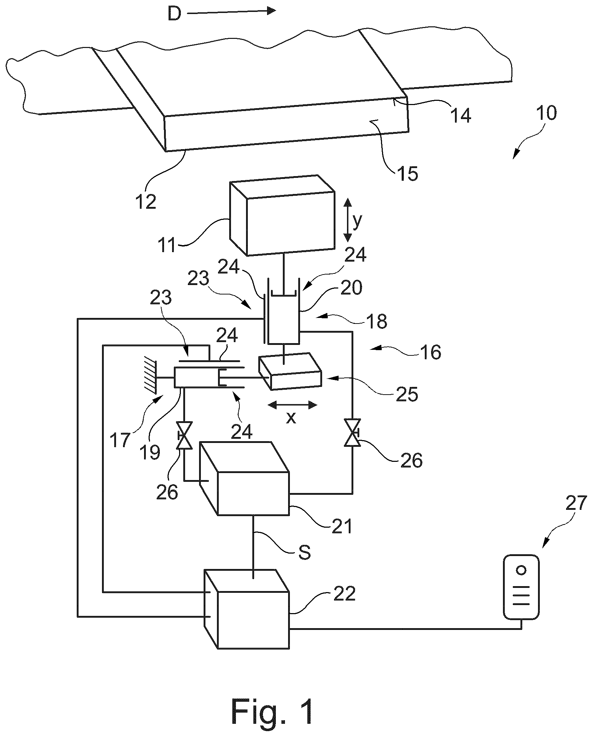

- Fig. 1: eine schematische Ansicht einer Bearbeitungseinrichtung mit einer Stelleinrichtung für ein Bearbeitungsaggregat.

Figur 1 zeigt eine stark schematisierte Ansicht einer Bearbeitungseinrichtung 10. Diese Bearbeitungseinrichtung 10 ist als eine Holzbearbeitungseinrichtung ausgebildet. Die Bearbeitungseinrichtung 10 umfasst ein Bearbeitungsaggregat 11 zum Bearbeiten von Werkstücken 12. Das Bearbeitungsaggregat 11 kann ein beliebiges Bearbeitungswerkzeug zum Ausführen eines Bearbeitungsvorgangs am Werkstück 12 aufweisen. Beispielsweise ist das Bearbeitungsaggregat 11 als ein Fräsaggregat, insbesondere Kantenfräsaggregat, Kappaggregat, Druckaggregat, Markieraggregat oder dergleichen, um eine Werkstückkante 14, eine Werkstückoberfläche 15 oder ein am Werkstück 12 angebrachtes Beschichtungsmaterial zu bearbeiten.

Die Bearbeitungseinrichtung 10 ist insbesondere als eine Durchlaufmaschine ausgebildet, bei welcher die Werkstücke 12 für einen Bearbeitungsvorgang in einer Durchlaufrichtung D relativ zum Bearbeitungsaggregat 11 transportiert werden. Hierfür weist die Bearbeitungseinrichtung 10 eine Transportvorrichtung 13 auf, durch welche die Werkstücke 12 nacheinander, d.h. im Durchlaufverfahren, zum Bearbeitungsaggregat 11 transportierbar sind. Ebenso kann die Bearbeitungseinrichtung 10 als eine stationäre Bearbeitungseinrichtung 10 ausgebildet sein, bei welcher die Werkstücke 12 stationär aufgenommen sind. Insbesondere ist die Bearbeitungseinrichtung 10 als eine CNC-Maschine ausgebildet.

Die zu bearbeitenden Werkstücke 12 sind vorzugsweise Werkstücke 12, die zumindest teilweise aus Holz, Holzwerkstoffen, Kunststoff, einem Verbundwerkstoff oder dergleichen ausgebildet sind. Die Werkstücke 12 sind vorzugsweise plattenförmig ausgebildet, beispielsweise als Massivholzplatte, Spanplatte, Leichtbauplatte, Sandwichplatte oder dergleichen. Diese können sowohl für die Möbel- als auch für die Bauelementefertigung vorgesehen sein.

Zum Ausführen des Bearbeitungsvorgangs ist das Bearbeitungsaggregat 11 an einer Stelleinrichtung 16 angeordnet. Durch diese Stelleinrichtung 16 ist eine Stellbewegung des Bearbeitungsaggregats 11 ansteuerbar, durch welche das Bearbeitungsaggregat 11 für den Bearbeitungsvorgang relativ zum Werkstück 12 verfahrbar vorgesehen ist. Insbesondere ist das Bearbeitungsaggregat 11 durch die Stelleinrichtung 16 während der Transportbewegung des Werkstücks 12 relativ zum Werkstück 12 verfahrbar vorgesehen, sodass der Bearbeitungsvorgang während der Transportbewegung des Werkstücks 12 ausführbar ist. Durch die Stelleinrichtung 16 ist eine mehrachsige Stellbewegung des Bearbeitungsaggregats 11 vorgesehen. Hierzu weist die Stelleinrichtung 16 eine erste Stelleinheit 17 auf, durch welche die Stellbewegung des Bearbeitungsaggregats 11 in eine X-Richtung ansteuerbar ist, sowie eine zweite Stelleinheit 18, durch welche die Stellbewegung des Bearbeitungsaggregats 11 in eine Y-Richtung ansteuerbar ist. Auf diese Weise ist durch die Stelleinheiten 17, 18 eine flexibel ausführbare Stellbewegung des Bearbeitungsaggregats 11 in einer X-Y-Ebene relativ zum Werkstück 12 ermöglicht. Beispielsweise entlang einer oder mehrerer Werkstückkanten 14, entlang einer Werkstückkontur oder zu einer der Werkstückoberflächen 15 bzw. Schmalflächen des Werkstücks 12.

In einer Weiterbildung der Stelleinrichtung 16 kann ebenso eine nicht näher dargestellte dritte Stelleinheit vorgesehen sein, durch welche die Stellbewegung des Bearbeitungsaggregats 11 in eine Z-Richtung ansteuerbar ist. Durch diese dritte Stelleinheit kann eine räumliche Stellbewegung des Bearbeitungsaggregats 11 relativ zum Werkstück 12 ausführbar sein. Zum Ausführen der Stellbewegung weist die Stelleinrichtung 16 zudem eine Führung 25 für das Bearbeitungsaggregat 11 auf, beispielsweise eine Linearführung.

Die erste und zweite Stelleinheit 17, 18 der Stelleinrichtung 16 weisen jeweils einen pneumatischen Aktuator 19, 20 auf, welche die Stellkraft zum Ansteuern der Stellbewegung des Bearbeitungsaggregats 11 in die X-Richtung und/oder Y-Richtung erzeugen. Die pneumatischen Aktuatoren 19, 20 werden durch eine Pneumatiksteuerung 21 mit einem Pneumatikmedium, vorzugsweise Druckluft, versorgt. Insbesondere sind die pneumatischen Aktuatoren 19, 20 als Pneumatikzylinder ausgebildet. Zur Ansteuerung der pneumatischen Aktuatoren 19, 20 ist diesen jeweils ein Regelventil 26 zugeordnet, welche durch die Pneumatiksteuerung 21 oder die Steuerungseinrichtung 22 regelbar sind. Durch die Regelventile 26 sind die pneumatischen Aktuatoren 19, 20 unabhängig voneinander regelbar. Durch die Regelventile 26 ist eine variable Druckregelung, variable Volumenstromregelung und/oder eine variable Richtungssteuerung des Pneumatikmediums vorgesehen. Dadurch ist die Stellbewegung der pneumatischen Aktuatoren 19, 20 dynamisch regelbar, d.h. diese sind mit einer variablen Stellgeschwindigkeit, variablen Stellkraft und/oder einem variablen Stellweg ausführbar.

Dadurch kann beispielsweise vorgesehen sein, dass das Bearbeitungsaggregat 11 beim Ausführen des Bearbeitungsvorgangs mit einer schnelleren Stellbewegung angesteuert wird, wenn das Bearbeitungsaggregat 11 in Richtung der Durchlaufrichtung D des sich bewegenden Werkstücks 12 verfahren wird und mit einer langsameren Stellbewegung, wenn das Bearbeitungsaggregat 11 entgegen der Durchlaufrichtung D des Werkstücks 12 verfahren wird. Auf diese Weise kann das Bearbeitungsaggregat 11 während des Bearbeitungsvorgangs in alle Bewegungsrichtungen X, Y mit einer im Wesentlichen gleichbleibenden Relativgeschwindigkeit zum sich bewegenden Werkstück 11 verfahren werden.

Zur Regelung der Stellbewegung ist eine Steuerungseinrichtung 22 vorgesehen, welche die Pneumatiksteuerung 21 mit einem Steuerungssignal S ansteuert. Dieses Steuerungssignal S wird durch die Steuerungseinrichtung 22 gebildet und an die Pneumatiksteuerung 21 übermittelt, sodass die Regelventile 26 in Abhängigkeit des Steuerungssignals S geregelt werden. Das Steuerungssignal S umfasst Stellinformationen, um die Stellbewegung des Bearbeitungsaggregats 11 für den Bearbeitungsvorgang anzusteuern. Diese Stellinformationen können ein definiertes Bearbeitungsprogramm zum Bearbeiten des Werkstücks 12 sein, beispielsweise CNC-Bearbeitungsdaten oder ein CNC-Bearbeitungsprogramm. Die Stellinformationen werden durch die Steuerungseinrichtung 22 in Abhängigkeit von Stellparametern der pneumatischen Aktuatoren 19, 20 und/oder in Abhängigkeit des zu bearbeitenden Werkstücks 12 angepasst und das Steuerungssignal S durch die angepassten Stellinformationen gebildet. Das Bearbeitungsprogramm kann dabei, insbesondere in Echtzeit, in Abhängigkeit der Stellparameter und/oder des Werkstücks 12 angepasst werden, wobei die erfassten Stellparameter der Steuerungseinrichtung 22 zyklisch oder kontinuierlich übermittelt werden. Dadurch kann eine dynamische Regelung der Ansteuerung der pneumatischen Aktuatoren 19, 20 durch das Steuerungssignal S gebildet sein.

Zum Erfassen der Stellparameter der pneumatischen Aktuatoren 19, 20 weist die Steuerungseinrichtung 22 eine Sensoreinheit 23 auf. Diese Sensoreinheit 23 umfasst eine Wegemesseinrichtung 24, die durch einen induktiven Sensor sowie einen zumindest teilweise magnetischen Zylinderkolben ausgebildet ist. Vorzugsweise ist der Kolbenboden des Zylinderkolbens magnetisch ausgebildet. Durch den induktiven Sensor ist ein Magnetfeld des zumindest teilweise magnetischen Kolbens erfassbar, sodass auf diese Weise die Stellparameter der pneumatischen Aktuatoren 19, 20 erfassbar sind. Vorzugsweise umfasst die Wegemesseinrichtung 24 einen Encoder bzw. Kodierer, der die erfassten Stellparameter der pneumatischen Aktuatoren 19, 20 in weiterverarbeitbare Signale wandelt. Die Stellparameter sind insbesondere eine Stellposition, ein Stellweg und/oder eine Stellgeschwindigkeit des Zylinderkolbens. Der induktive Sensor kann in oder an der Zylinderwand der pneumatischen Aktuatoren 19, 20 vorgesehen sein. Vorzugsweise ist die Wegmesseinrichtung 24 integral mit den pneumatischen Aktuatoren 19, 20 ausgebildet.

Die Erfassung der Stellparameter durch die Sensoreinheit 23, die Erzeugung des Steuerungssignals S in Abhängigkeit von den erfassten Stellparametern durch die Steuerungseinrichtung 22 sowie die Ansteuerung der pneumatischen Aktuatoren 19, 20 in Abhängigkeit vom Steuerungssignal S kann in Echtzeit erfolgen. Dadurch kann die Erfassung der Stellparameter der pneumatischen Aktuatoren 19, 20 sowie die geregelte Ansteuerung der Stellbewegung in Abhängigkeit der Stellparameter im Wesentlichen zeitgleich erfolgen, wodurch während dem Ausführen des Bearbeitungsvorgangs eine gezielte Regelung der Stellbewegung in Abhängigkeit einer Stellposition, eines ausgeführten Stellweges und/oder einer Stellgeschwindigkeit ermöglicht ist. Werkstücktoleranzen, Konturungenauigkeiten des Werkstücks, Abweichende Werkstückpositionierungen oder dergleichen können auf diese Weise während dem Ausführen des Bearbeitungsvorgangs in Echtzeit ausgeglichen werden. Ergänzend wird dieser Ausgleich durch die kompressiblen Eigenschaften des Pneumatikmediums erreicht, welche während des Bearbeitungsvorgangs ein federndes Verhalten der pneumatischen Aktuatoren 19, 20 bewirkt. Neben der Regelung der Stellbewegung ist dadurch eine Kompensation von Werkstücktoleranzen, Konturungenauigkeiten, Abweichende Werkstückpositionierungen oder dergleichen vorgesehen. Durch die auf diese Weise gezielt regelbare Stellbewegung des Bearbeitungsaggregats 11 sowie die Möglichkeit des systembedingten Ausgleichs von Werkstück- und/oder Positionsungenauigkeiten erfordert die Stelleinrichtung 16 keine zusätzliche Tasteinrichtung.

Durch die Erfassung der Stellparameter beim Ausführen des Bearbeitungsvorgangs ist ein Betriebszustand bzw. ein Istzustand der pneumatischen Aktuatoren 19, 20 und/oder des Bearbeitungsaggregats 11 durch die Steuerungseinrichtung 22 bestimmbar. Dieser Istzustand kann von einem Sollzustand der pneumatischen Aktuatoren 19, 20 und/oder des Bearbeitungsaggregats 11 abweichen, beispielsweise aufgrund von Temperatureinflüssen, Verschleißerscheinungen oder aufgrund sonstiger Einflüsse auf die pneumatischen Aktuatoren 19, 20 bzw. das Bearbeitungsaggregat 11. Die Bestimmung einer Abweichung des Istzustands vom Sollzustand ist durch die Bestimmung einer Änderung der Stellparameter während dem Ausführen eines Bearbeitungsvorgangs oder beim Ausführen mehrerer aufeinanderfolgender Bearbeitungsvorgänge vorgesehen. Die Stellinformationen können in Abhängigkeit von der Abweichung des Istzustands vom Sollzustand angepasst werden, sodass beim Ausführen des Bearbeitungsvorgangs oder beim Ausführen mehrerer aufeinanderfolgender Bearbeitungsvorgänge eine gleichbleibende Bearbeitungsqualität erzielt werden kann.

Durch die Erfassung der Stellparameter über eine Zeitspanne kann zudem eine Änderungsrate des Istzustands bestimmt werden, wodurch eine Abweichung des Istzustands vom Sollzustand vorherbestimmt werden kann. Auf diese Weise sind Verschleißerscheinungen oder sonstige Änderungen eines Betriebszustands der Bearbeitungseinrichtung 10 im Vorfeld erkennbar, sodass Wartungen oder Reparaturen frühzeitig veranlasst werden können.

Die Bearbeitungseinrichtung 10 kann durch ein Datennetzwerk mit einer zentralen Rechnereinheit 27 verbunden sein. Mit dieser zentralen Rechnereinheit 27 kann ein kontinuierlicher Datenaustausch vorgesehen sein, insbesondere ein Austausch der erfassten Stellparameter, der ermittelten Soll- und/oder Istzustände oder weiterer Maschinendaten, sodass die Bearbeitungseinrichtung 10 durch die zentrale Rechnereinheit 27 überwacht und/oder gewartet werden kann. Mit der zentralen Rechnereinheit 27 können eine Vielzahl weiterer Bearbeitungseinrichtungen oder sonstiger Produktions- und Logistikeinrichtungen über das Datennetzwerk verbunden sein, wodurch ein intelligenter Daten- bzw. Kommunikationsaustausch im Sinne der Industrie 4.0 ermöglicht ist.

### Bezugszeichenliste

- 10.: Bearbeitungseinrichtung
- 11.: Bearbeitungsaggregat
- 12.: Werkstück
- 13.: Transportvorrichtung
- 14.: Werkstückkante
- 15.: Schmalseite
- 16.: Stelleinrichtung
- 17.: erste Stelleinheit
- 18.: zweite Stelleinheit
- 19.: erster pneumatischer Aktuator
- 20.: zweiter pneumatischer Aktuator
- 21.: Pneumatiksteuerung
- 22.: Steuerungseinrichtung
- 23.: Sensoreinheit
- 24.: Wegmesseinrichtung
- 25.: Führung
- 26.: Regelventil
- 27.: zentrale Rechnereinheit

## Patentansprüche

1. Stelleinrichtung (16), eingerichtet zum Regeln einer Stellbewegung eines Bearbeitungsaggregats (11) einer Holzbearbeitungseinrichtung (10) für einen Bearbeitungsvorgang an einem in einer Durchlaufrichtung (D) zum Bearbeitungsaggregat (11) bewegbaren Werkstück (12), mit einer ersten Stelleinheit (17), durch welche die Stellbewegung des Bearbeitungsaggregats (11) in eine erste Bewegungsrichtung (X) relativ zu dem zu bearbeitenden Werkstück (12) ansteuerbar ist, sowie mit wenigstens einer weiteren Stelleinheit (18), durch welche die Stellbewegung des Bearbeitungsaggregats (11) in wenigstens eine weitere Bewegungsrichtung (Y) relativ zu dem zu bearbeitenden Werkstück (12) ansteuerbar ist, wobei die erste und/oder die wenigstens eine weitere Stelleinheit (17, 18) zumindest einen pneumatischen Aktuator (19, 20) zum Ansteuern der Stellbewegung aufweisen,
wobei
eine Steuerungseinrichtung (22) zum Ansteuern des zumindest einen pneumatischen Aktuators (19, 20) vorgesehen ist und die Ansteuerung des zumindest einen pneumatischen Aktuators (19, 20) in Abhängigkeit eines Steuerungssignals (S) der Steuerungseinrichtung (22) regelbar ist, und
die Steuerungseinrichtung (22) eine Sensoreinheit (23) zum Erfassen wenigstens eines Stellparameters des zumindest einen pneumatischen Aktuators (19, 20) aufweist und die Regelung der Ansteuerung des zumindest einen pneumatischen Aktuators (19, 20) in Abhängigkeit von dem wenigstens einen erfassten Stellparameter vorgesehen ist,
wobei
die Sensoreinheit (23) integral mit dem zumindest einen pneumatischen Aktuator (19, 20) ausgebildet ist,
wobei das Steuerungssignal Stellinformationen zum Ausführen des Bearbeitungsvorgangs umfasst, die Stellinformationen ein Bearbeitungsprogramm bilden, welches Stellinformationen zum Ansteuern einer definierten Stellbewegung des Bearbeitungsaggregats umfasst,
wobei die Steuerungseinrichtung eingerichtet ist, die Stellinformationen in Abhängigkeit von dem wenigstens einen erfassten Stellparameter anzupassen, so dass das vorgegebene Bearbeitungsprogramm individuell an ein zu bearbeitendes Werkstück angepasst wird.

2. Stelleinrichtung nach Anspruch 1,
**dadurch gekennzeichnet, dass**
die Sensoreinheit (23) zumindest eine Wegmesseinrichtung (24) aufweist und der wenigstens eine erfasste Stellparameter eine Stellposition, ein Stellweg und/oder eine Stellgeschwindigkeit des zumindest einen pneumatischen Aktuators (19, 20) umfasst.

3. Stelleinrichtung nach einem der vorhergehenden Ansprüche, **dadurch gekennzeichnet, dass**
das Steuerungssignal (S) Stellinformationen zum Ausführen
des Bearbeitungsvorgangs umfasst, wobei die Stellinformationen durch die Steuerungseinrichtung (22) in Abhängigkeit von dem wenigstens einen erfassten Stellparameter des zumindest einen pneumatischen Aktuators (19, 20) und/oder dem zu bearbeitenden Werkstück (12) anpassbar sind, sodass eine regelbare Stellbewegung des Bearbeitungsaggregats (11) ausführbar ist.

4. Stelleinrichtung nach einem der vorhergehenden Ansprüche, **dadurch gekennzeichnet, dass**
der zumindest eine pneumatische Aktuator (19, 20) durch
ein Regelventil (26) mit einer variablen Druckregelung, variablen Volumenstromregelung und/oder variablen Richtungssteuerung ansteuerbar ist und vorzugsweise eine Regelung der Stellbewegung mit einer variablen Stellgeschwindigkeit, variablen Stellkraft und/oder einem variablen Stellweg vorgesehen ist.

5. Stelleinrichtung nach einem der vorhergehenden Ansprüche,
**dadurch gekennzeichnet, dass**
das Bearbeitungsaggregat (11) als ein Fräsaggregat, Kappaggregat, Beschichtungsaggregat, Druckaggregat, Markieraggregat oder dergleichen ausgebildet ist und zum Ausführen des Bearbeitungsvorgangs durch die erste und/oder die wenigstens eine weitere Stelleinheit (17, 18) in Anlage zu dem Werkstück (12) bringbar ist.

6. Bearbeitungseinrichtung (10) mit wenigstens einem Bearbeitungsaggregat (11) zum Bearbeiten von Werkstücken (12) die in einer Durchlaufrichtung (D) zu dem Bearbeitungsaggregat (11) bewegbar sind, wobei das Bearbeitungsaggregat (11) relativ zu dem zu bearbeitenden Werkstück (12) verfahrbar vorgesehen ist,
**dadurch gekennzeichnet, dass**
zum Verfahren des Bearbeitungsaggregats (12) eine Stelleinrichtung (16) nach einem der Ansprüche 1 bis 5 vorgesehen ist.

7. Verfahren zum Regeln einer Stellbewegung eines Bearbeitungsaggregats (11) relativ zu einem zu bearbeitenden Werkstück (12) mit einer Stelleinrichtung (16) nach einem der Ansprüche 1 bis 5, wobei zumindest ein pneumatischer Aktuator (19) einer ersten Stelleinheit (17) und/oder zumindest ein pneumatischer Aktuator (20) wenigstens einer weiteren Stelleinheit (18) angesteuert werden, um das Bearbeitungsaggregat (11) in einer ersten und/oder in wenigstens einer weiteren Bewegungsrichtung (X, Y) zu verfahren, wobei die pneumatischen Aktuatoren (19, 20) in Abhängigkeit eines Steuerungssignals (S) einer Steuerungseinrichtung (22) geregelt angesteuert werden.

8. Verfahren nach Anspruch 7,
**dadurch gekennzeichnet, dass**
eine Sensoreinheit (23) Stellparameter der pneumatischen Aktuatoren (19, 20) erfasst und an die Steuerungseinrichtung (22) übermittelt und die Ansteuerung der pneumatischen Aktuatoren (19, 20) in Abhängigkeit von den erfassten Stellparametern, vorzugsweise in Abhängigkeit einer Stellposition, eines Stellweges und/oder einer Stellgeschwindigkeit des zumindest einen pneumatischen Aktuators (19, 20), geregelt wird.

9. Verfahren nach Anspruch 7 oder 8,
**dadurch gekennzeichnet, dass**
das Steuerungssignal (S) zum Ansteuern der pneumatischen Aktuatoren (19, 20) durch Stellinformationen zum Ausführen des Bearbeitungsvorgangs am Werkstück (12) gebildet wird, wobei die Stellinformationen durch die Steuerungseinrichtung (22) in Abhängigkeit von den erfassten Stellparametern der pneumatischen Aktuatoren (19, 20) und/oder dem zu bearbeitenden Werkstück (12) angepasst werden, sodass eine geregelte Stellbewegung des Bearbeitungsaggregats (11) für den Bearbeitungsvorgang ausgeführt wird.

10. Verfahren nach Anspruch 9,
**dadurch gekennzeichnet, dass**
durch die beim Ausführen des Bearbeitungsvorgangs oder beim Ausführen mehrerer aufeinanderfolgender Bearbeitungsvorgängen erfassten Stellparameter eine Abweichung eines Istzustands der pneumatischen Aktuatoren (19, 20) von einem Sollzustand ermittelt und/oder vorherbestimmt wird und bei einer Abweichung des Istzustands vom Sollzustand die Stellinformationen zum Ausführen des Bearbeitungsvorgangs in der Weise angepasst werden, dass die Abweichung beim Ansteuern der pneumatischen Aktuatoren (19, 20) ausgeglichen wird.

11. Verfahren nach einem der Ansprüche 8 bis 10,
**dadurch gekennzeichnet, dass**
die erfassten Stellparameter der pneumatischen Aktuatoren (19, 20) einer zentralen Rechnereinheit (27) übermittelt werden und die Bearbeitungseinrichtung (10) in Abhängigkeit von den erfassten Stellparametern durch die zentrale Rechnereinheit (27) überwacht und/oder gewartet wird.

## Claims

1. Positioning device (16), configured to control a positioning movement of a machining unit (11) of a woodworking device (10) for a machining process on a workpiece (12) that is movable in a throughput direction (D) towards the machining unit (11), comprising a first positioning unit (17) by means of which the positioning movement of the machining unit (11) can be triggered in a first movement direction (X) relative to the workpiece (12) to be machined, and comprising at least one further positioning unit (18) by means of which the positioning movement of the machining unit (11) can be triggered in at least one further movement direction (Y) relative to the workpiece (12) to be machined, wherein the first and/or the at least one further positioning unit (17, 18) comprise at least one pneumatic actuator (19, 20) for triggering the positioning movement,
wherein
a control device (22) is provided for triggering the at least one actuator (19, 20) and the triggering of the at least one pneumatic actuator (19, 20) can be controlled depending on a control signal (S) of the control device (22), and
the control device (22) comprises a sensor unit (23) for recording at least one positioning parameter of the at least one pneumatic actuator (19, 20) and control of the triggering of the at least one pneumatic actuator (19, 20) is provided depending on the at least one recorded positioning parameter,
wherein
the sensor unit (23) is formed integrally with the at least one pneumatic actuator (19, 20),
wherein the control signal comprises positioning information for carrying out the machining process, the positioning information forms a machining program that comprises positioning information for triggering a defined positioning movement of the machining unit,
wherein the control device is configured to adapt the positioning information depending on the at least one recorded positioning parameter, such that the predefined machining program is adapted individually to a workpiece to be machined.

2. Positioning device according to claim 1,
**characterised in that**
the sensor unit (23) comprises at least one distance measuring device (24) and the at least one recorded positioning parameter comprises a positioning position, a positioning distance and/or a positioning speed of the at least one pneumatic actuator (19, 20).

3. Positioning device according to any of the preceding claims,
**characterised in that**
the control signal (S) comprises positioning information for carrying out the machining process, wherein the positioning information can be adapted by means of the control device (22) depending on the at least one recorded positioning parameter of the at least one pneumatic actuator (19, 20) and/or depending on the workpiece to be machined (12), such that a controllable positioning movement of the machining unit (11) can be carried out.

4. Positioning device according to any of the preceding claims,
**characterised in that**
the at least one pneumatic actuator (19, 20) can be triggered by means of a control valve (26) having variable pressure control, variable volume flow control and/or variable direction control and, preferably, control of the positioning movement with a variable positioning speed, variable positioning force and/or variable positioning distance is provided.

5. Positioning device according to any of the preceding claims,
**characterised in that**
the machining unit (11) is designed as a milling unit, trimming unit, coating unit, printing unit, marking unit or the like and can be brought into contact with the workpiece (12) by means of the first and/or the at least one further positioning unit (17, 18) in order to carry out the machining process.

6. Machining device (10) comprising at least one machining unit (11) for machining workpieces (12) that are movable in a throughput direction (D) towards the machining unit (11), wherein the machining unit (11) is provided so as to be displaceable relative to the workpiece (12) to be machined,
**characterised in that**
a positioning device (16) according to any of claims 1 to 5 is provided for displacing the machining unit (12).

7. Method for controlling a positioning movement of a machining unit (11) relative to a workpiece (12) to be machined by means of a positioning device (16) according to any of claims 1 to 5, wherein at least one pneumatic actuator (19) of a first positioning unit (17) and/or at least one pneumatic actuator (20) of at least one further positioning unit (18) are triggered for displacing the machining unit (11) in a first and/or in at least one further movement direction (X, Y), wherein the pneumatic actuators (19, 20) are triggered in a controlled manner depending on a control signal (S) of a control device (22).

8. Method according to claim 7,
**characterised in that**
a sensor unit (23) records positioning parameters of the pneumatic actuators (19, 20) and transmits same to the control device (22) and the triggering of the pneumatic actuators (19, 20) is controlled depending on the recorded positioning parameters, preferably depending on a positioning position, a positioning distance and/or a positioning speed of the at least one pneumatic actuator (19, 20).

9. Method according to claim 7 or 8,
**characterised in that**
the control signal (S) for triggering the pneumatic actuators (19, 20) is formed by positioning information for carrying out the machining process on the workpiece (12), wherein the positioning information is adapted by means of the control device (22) depending on the recorded positioning parameters of the pneumatic actuators (19, 20) and/or depending on the workpiece (12) to be machined, such that a controlled positioning movement of the machining unit (11) is carried out for the machining process.

10. Method according to claim 9,
**characterised in that**
a deviation of an actual state of the pneumatic actuators (19, 20) from a target state is ascertained and/or predetermined by means of the positioning parameters recorded when the machining process is carried out or when multiple successive machining processes are carried out and, in the event of a deviation of the actual state from the target state, the positioning information for carrying out the machining process is adapted in such a way that the deviation is compensated for when the pneumatic actuators (19, 20) are triggered.

11. Method according to any of claims 8 to 10,
**characterised in that**
the recorded positioning parameters of the pneumatic actuators (19, 20) are transmitted to a central processing unit (27) and the machining device (10) is monitored and/or serviced by means of the central processing unit (27) depending on the recorded positioning parameters.

## Revendications

1. Dispositif (16) de réglage, conçu pour réguler un mouvement de réglage d'un groupe d'usinage (11) d'un dispositif (10) d'usinage du bois pour un processus d'usinage sur une pièce (12) mobile dans une direction (D) de passage par rapport au groupe d'usinage (11), avec une première unité de réglage (17), par laquelle le mouvement de réglage du groupe d'usinage (11) peut être commandé dans une première direction de mouvement (X) par rapport à la pièce (12) à usiner, ainsi qu'avec au moins une autre unité (18) de réglage, par laquelle le mouvement de réglage du groupe d'usinage (11) dans au moins une autre direction (Y) de mouvement par rapport à la pièce (12) à usiner peut être commandé, dans lequel la première et/ou la au moins une autre unité (17, 18) de réglage présentent au moins un actionneur pneumatique (19, 20) pour commander le mouvement de réglage,
dans lequel
un dispositif (22) de commande pour commander le au moins un actionneur pneumatique (19, 20) est prévu et la commande du au moins un actionneur pneumatique (19, 20) peut être régulée en fonction d'un signal (S) de commande du dispositif de commande (22), et le dispositif de commande (22) présente une unité formant capteur (23) pour détecter au moins un paramètre de réglage du au moins un actionneur pneumatique (19, 20) et la régulation de la commande du au moins un actionneur pneumatique (19, 20) est prévue en fonction du au moins un paramètre de réglage détecté,
dans lequel
l'unité formant capteur (23) est réalisée d'une seule pièce avec le au moins un actionneur pneumatique (19, 20),
dans lequel le signal de commande comprend des informations de réglage pour effectuer le processus d'usinage, les informations de réglage forment un programme d'usinage, lequel comprend des informations de réglage pour commander un mouvement de réglage défini du groupe d'usinage, dans lequel le dispositif de commande est conçu pour adapter les informations de réglage en fonction du au moins un paramètre de réglage détecté, de sorte que le programme d'usinage prédéfini est adapté individuellement à une pièce à usiner.

2. Dispositif de réglage selon la revendication 1,
**caractérisé en ce que**
l'unité formant capteur (23) présente au moins un dispositif (24) de mesure de trajet et le au moins un paramètre de réglage détecté comprend une position de réglage, un trajet de réglage et/ou une vitesse de réglage du au moins un actionneur pneumatique (19, 20).

3. Dispositif de réglage selon l'une quelconque des revendications précédentes,
**caractérisé en ce que**
le signal (S) de commande comprend des informations de réglage pour effectuer le processus d'usinage, dans lequel les informations de réglage peuvent être adaptées par le dispositif de commande (22) en fonction du au moins un paramètre de réglage détecté du au moins un actionneur pneumatique (19, 20) et/ou de la pièce (12) à usiner, de sorte qu'un mouvement de réglage pouvant être régulé du groupe d'usinage (11) peut être effectué.

4. Dispositif de réglage selon l'une quelconque des revendications précédentes,
**caractérisé en ce que**
le au moins un actionneur pneumatique (19, 20) peut être commandé par une soupape (26) de régulation avec une régulation de pression variable, régulation de débit volumique variable et/ou commande de direction variable et de préférence une régulation du mouvement de réglage avec une vitesse de réglage variable, force de réglage variable et/ou un trajet de réglage variable est prévue.

5. Dispositif de réglage selon l'une quelconque des revendications précédentes,
**caractérisé en ce que**
le groupe d'usinage (11) est réalisé en tant que groupe de fraisage, groupe de coupe, groupe de revêtement, groupe d'impression, groupe de marquage ou similaire et pour effectuer le processus d'usinage peut être amené en appui par rapport à la pièce (12) par la première et/ou la au moins une autre unité (17, 18) de réglage.

6. Dispositif (10) d'usinage avec au moins un groupe d'usinage (11) pour l'usinage de pièces (12) qui sont mobiles dans une direction (D) de passage vers le groupe d'usinage (11), dans lequel le groupe d'usinage (11) est prévu de manière à pouvoir se déplacer par rapport à la pièce (12) à usiner,
**caractérisé en ce que**
pour le déplacement du groupe (12) d'usinage un dispositif (16) de réglage selon l'une quelconque des revendications 1 à 5 est prévu.

7. Procédé pour réguler un mouvement de réglage d'un groupe d'usinage (11) par rapport à une pièce (12) à usiner avec un dispositif de réglage (16) selon l'une quelconque des revendications 1 à 5, dans lequel au moins un actionneur pneumatique (19) d'une première unité de réglage (17) et/ou au moins un actionneur pneumatique (20) d'au moins une autre unité (18) de réglage sont commandés, afin de déplacer le groupe d'usinage (11) dans une première et/ou dans au moins une autre direction de mouvement (X, Y), dans lequel les actionneurs pneumatiques (19, 20) sont commandés de manière régulée en fonction d'un signal (S) de commande d'un dispositif de commande (22).

8. Procédé selon la revendication 7,
**caractérisé en ce que**
une unité formant capteur (23) détecte les paramètres de réglage des actionneurs pneumatiques (19, 20) et les transmet au dispositif de commande (22) et la commande des actionneurs pneumatiques (19, 20) est régulée en fonction des paramètres de réglage détectés, de préférence en fonction d'une position de réglage, d'un trajet de réglage et/ou d'une vitesse de réglage du au moins un actionneur pneumatique (19, 20).

9. Procédé selon la revendication 7 ou la revendication 8,
**caractérisé en ce que**
le signal de commande (S) pour commander les actionneurs pneumatiques (19, 20) est formé par des informations de réglage pour effectuer le processus d'usinage sur la pièce (12), dans lequel les informations de réglage sont adaptées par le dispositif de commande (22) en fonction des paramètres de réglage détectés des actionneurs pneumatiques (19, 20) et/ou de la pièce (12) à usiner, de sorte qu'un mouvement de réglage régulé du groupe d'usinage (11) pour le processus d'usinage est effectué.

10. Procédé selon la revendication 9,
**caractérisé en ce que**
un écart entre un état réel des actionneurs pneumatiques (19, 20) et un état théorique est déterminé et/ou prédéfini par les paramètres de réglage détectés lorsque le processus d'usinage est effectué ou lorsque plusieurs étapes d'usinage successives sont effectuées et lors d'un écart entre l'état réel et l'état théorique les informations de réglage pour effectuer le processus d'usinage sont adaptées de telle sorte que l'écart lors de la commande des actionneurs pneumatiques (19, 20) est compensé.

11. Procédé selon l'une quelconque des revendications 8 à 10,
**caractérisé en ce que**
les paramètres de réglage détectés des actionneurs pneumatiques (19, 20) sont transmis à une unité de calcul centrale (27) et le dispositif (10) d'usinage est surveillé et/ou fait l'objet d'une maintenance par l'unité de calcul centrale (27) en fonction des paramètres de réglage détectés.
